## Europäisches Patentamt
## European Patent Office
## Office européen des brevets

(19)

(11) Veröffentlichungsnummer : **0 035 167 B1**

(12) # EUROPÄISCHE PATENTSCHRIFT

(45) Veröffentlichungstag der Patentschrift :
30.11.88

(51) Int. Cl.⁴ : **F 16 J 15/38**

(21) Anmeldenummer : **81101136.0**

(22) Anmeldetag : **18.02.81**

(54) **Sekundäres Dichtelement für axiale Gleitringdichtungen.**

(30) Priorität : **29.02.80 DE 3007665**

(43) Veröffentlichungstag der Anmeldung :
**09.09.81 Patentblatt 81/36**

(45) Bekanntmachung des Hinweises auf die Patenterteilung : **30.11.88 Patentblatt 88/48**

(84) Benannte Vertragsstaaten :
**AT BE CH DE FR GB IT LI LU NL SE**

(56) Entgegenhaltungen :
**CH-A- 471 338
DE-A- 2 158 534
DE-A- 2 755 502
DE-U- 8 005 477
DE-U- 8 014 224
GB-A- 896 176
GB-A- 998 393
US-A- 2 922 668
US-A- 3 117 794
US-A- 3 947 045**

(73) Patentinhaber : **Schlegel, Rainer
Albanstrasse 18
D-6234 Hattersheim 1 (DE)**

(72) Erfinder : **Schlegel, Rainer
Albanstrasse 18
D-6234 Hattersheim 1 (DE)**

**Beschreibung**

Axiale Gleitringdichtungen dienen zur Abdichtung von Wellendurchführungen von Maschinen. Eine axial wirkende Kraft drückt einen rotierenden Gleitring gegen einen feststehenden Gegenring. Der rotierende Gleitring weist eine gewisse axiale und radiale Beweglichkeit auf und wird auf der Welle mittels eines sekundären Dichtelements, meist einem O-Ring, einer Manschette oder Keilring, abgedichtet. Dieses sekundäre Dichtelement ist je nach Einsatz und Funktion der Maschine der unterschiedlichsten Beanspruchung durch Temperatur, Druck, Schwingung, Korrosion, Quellung und Schrumpfung ausgesetzt.

Dieser Dichtring wird überwiegend aus gummielastischen Werkstoffen hergestellt. Die hohe Elastizität dieser Werkstoffe bietet den Vorteil, Oberflächenrauhheiten an den Abdichtflächen auszugleichen und insbesondere im Einsatz auftretende Schwingungen der Maschine elastisch aufzunehmen. Damit wird ein planparalleles Laufen der Gleitflächen des Gleitringes zu denen des Gegenringes gewährleistet. Die in der chemischen- oder pharmazeutischen Industrie eingesetzten Gleitringdichtungen für Pumpen, Rührwerke u.a. müssen in vielen Fällen mit Werkstoffen für radiale Dichtelemente arbeiten, die keine genügende Elastizität besitzen, aber dafür die geforderte chemische Beständigkeit aufweisen, z. B. Polytetrafluoräthylen, im folgenden PTFE genannt. Diese sekundären Dichtelemente werden häufig als Keilringe ausgeführt. Gleitringdichtungen dieser Art weisen höhere Leckraten als Gleitringdichtungen mit gummielastischen, sekundären Dichtungen auf. Außerdem wird bei einem Keilring wegen der großen Reibfläche die axiale Beweglichkeit des Gleitringes auf der Welle erschwert. Weiterhin werden auch PTFE-O-Ringe, PTFE-Manschetten oder O-Ringe mit elastischem Kern und PTFE-Mantel eingesetzt.

Die Haltbarkeit der sekundären Dichtelemente für Gleitringdichtungen wird neben der Beanspruchung durch Chemikalien im wesentlichen durch die während des Betriebes auftretende Temperatur und die Schwingungen der Welle begrenzt. Gleitringdichtungen erzeugen an den gleitenden Flächen Wärme, die das sekundäre Dichtelement des Gleitringes belastet. Die erzeugte Wärme hängt bei gleicher Oberflächengüte der Gleitringe und der Gegenringe von dem Gleitverhalten der eingesetzten Werkstoffe und von den Schmiereigenschaften des abzudichtenden Mediums ab. Als Werkstoffe für Gegenringe und Gleitringe sind in der chemischen Industrie Keramik und Kunstkohle bzw. Graphit häufig vertreten. In den letzten Jahren ist die Entwicklung zu hochverschleißfesten Werkstoffen wie Wolframkarbid (Hartmetall) oder Siliziumkarbid weiter gegangen. Bei der Paarung dieser Werkstoffe wird ein höherer Reibungskoeffizient in Kauf genommen als bei der Paarung Keramik-Kohle. Der Einsatz hochverschleißfester Werkstoffe durch Paarung von Wolframkarbid gegen Wolframkarbid, Wolframkarbid gegen Siliziumkarbid bringt fast in allen Fällen eine höhere thermische Belastung für das sekundäre Dichtelement des Gleitringes. Diese führt zum häufigeren Versagen der Gleitringdichtung durch Zerstörung oder Verformung des sekundären Dichtelementes.

Andererseits weist das sekundäre Dichtelement des Gleitringes eine hohe Empfindlichkeit gegenüber Schmutzteilchen, wie z. B. Rost, auf. Bei Elastomer-Dichtungen arbeitet sich der Schmutz ein, bei PTFE-Dichtungen hinterläßt der Schmutz Schleifspuren am Dichtelement. Es bilden sich auf diese Weise Kanäle, die zu Leckverlusten führen. Die Nachteile der gummielastischen Werkstoffe sind die geringe chemische und die geringe thermische Beständigkeit. Der Nachteil der Empfindlichkeit gegenüber Schmutzteilchen trifft für alle nicht verschleißfesten Werkstoffe zu.

Dichtelemente aus PTFE besitzen eine hohe chemische und thermische Beständigkeit. Im Dauerbetrieb kann PTFE bis zu etwa 200 °C eingesetzt werden. Die Elastizität ist sehr gering, es besitzt im Gegenteil ein unangenehmes Fließverhalten, das unter steigender Temperatur und steigendem Druck zunimmt. Als Gegenmaßnahme wird eine weitgehende Kammerung der PTFE-Dichtung vorgesehen und PTFE mit Glas, Graphit, Kohlenstoffe, keramischem oder metallischem Material gefüllt. Das sekundäre Dichtelement kann aber nicht vollständig gekammert werden. Der Gleitring muß auf der Welle einen geringfügigen radialen Spielraum haben. Dieser Spalt, zwischen Gleitring und Welle, genügt aber, um das erwähnte PTFE-Material, durch die auftretenden Schwingungen an der Welle, hindurchtreten zu lassen. Sekundäre Dichtelemente mit PTFE-Umhüllungen, die als O-Ringe ausgebildet sind und einen Elastomer als Kern besitzen, versagen häufig, weil durch Diffusion und Walken die Chemikalien in das Innere des Dichtelementes eindringen und damit die elastische Stütze zerstören. Sekundäre Dichtelemente aus PTFE werden daher auch mit keilförmigem Querschnitt hergestellt, sie erfordern aber eine besondere Formgebung des Gleitringes zur Aufnahme des Keiles. Keilförmige sekundäre Dichtelemente hemmen aber die axiale Beweglichkeit des Gleitringes und verhindern die radiale Beweglichkeit ganz.

Ein weiteres sekundäres Dichtelement wird in der Druckschrift US-A 29 22 668 beschrieben. Darin wird eine zweiteilige Sekundärdichtung, die durch zwei konische Scheiben mit spiegelbildlicher Anordnung gebildet wird, aufgezeigt. Der Gleitring besitzt eine Kammer zur Aufnahme dieser Scheiben. Mit einem federgespannten Druckring wird die Scheibe angepreßt. Im Einsatz führt der Gleitring die Taumelbewegungen aus. Die breite Basis der konischen Scheiben kann die Taumelbewegung auf der Welle nicht mit vollziehen. Durch die Taumelbewegung des Gleitringes bildet sich eine Dichtlinie zur zylindrischen Bohrung des Gleitringes. Diese Dichtlinie verläuft schräg und rotierend über der Oberfläche der äußeren Basis der beiden konischen Scheiben. Damit wird Flüssigkeit in Richtung des Druckgefälles transportiert. Weiterhin behindert die breite Fläche der äußeren Basis der konischen Scheiben, die sich an die zylindrische Bohrung des Gleitringes anlehnt, die notwendige Taumelbewegung mit auszuführen und öffnet die beiden Stirnflächen des Gleitringes und des Gegenringes. Anderseits resultieren durch die Taumelbewegungen rotierende Druckwellen auf die Kanten der konischen Dichtscheiben. Der Druck wird vom Gleitring und vom Druckring ausgeübt. Es kommt zu einem umlaufenden, entsprechend der auftretenden Druckwelle, Versatz der äußeren Flächen der beiden konischen Scheiben. Es ergibt sich ein umlaufender Spalt durch Stauchung zwischen den beiden konischen Scheiben. Damit sind mindestens an zwei Stellen bei dieser Gleitringdichtungskonstruktion Leckagen vorprogrammiert. Wird dann Verschleiß an der äußeren Basis spürbar, kommt es zum totalen Ausfall der Dichtung. Andererseits kann z. B. die äußere konische Scheibe, die am weitesten von der Stirnfläche des Gleitringes entfernt ist, sich verspannen und in einer entgegengesetzten Schräglage verbleiben. Damit wird ebenfalls die Dichtwirkung der Sekundärdichtung nicht mehr gegeben, gleichzeitig die Beweglichkeit des Gleitringes gehemmt. Das führt zunächst zu höheren Leckraten und schließlich zum Ausfall der Dichtung.

Ein anderer flexibler Dichtring nach Druckschrift US-A 31 17 794 ist ein V-förmiges Dichtelement, das zwischen Feststellring und Gleitring eingebracht ist. Dieser V-förmige Dichtring ist ein flexibler Ring. Der Gleitring greift mit Stiften in Bohrungen des Feststellringes ein, die genügend Spiel für Wellenauslenkungen zulassen. Der Gleitring liegt an der gesamten äußeren Fläche des einen Schenkels des V-förmigen Dichtringes an. Der Gleitring haftet am V-förmigen Dichtring durch Adhäsion, die durch eindringende Flüssigkeit verstärkt wird, und Reibung. Damit werden die Bewegungen der Welle mit dem Feststellring und dem V-förmigen Dichtring und daraus resultierende Belastungen auf den Gleitring übertragen. Das V-förmige Dichtelement verformt sich und kann in den Freiraum zwischen Feststellring und Gleitring eingeklemmt werden. Die Bewegungen des Gleitringes führen an der Berührungslinie mit dem Gegenring zu Undichtigkeiten. Die Gleitringdichtung fällt vorzeitig aus, bevor durch entsprechenden Verschleiß ein natürlicher Ausfall gegeben ist.

Ein anderes sekundäres Dichtelement nach DE-A1 27 55 502 besteht aus einem metallischen oder gummielastischen Kernstück als O-Ring, der einen Überzug aus Graphit erhält. Nachteilig ist bei diesem Dichtelement die Unbeständigkeit des Graphits gegenüber stark oxidierenden Chemikalien, die Unbeständigkeit des elastomeren Kerns und sein unelastisches Verhalten des Graphitmantels. Die Graphithülle kann leicht unter Druck- und Schwingungsbeanspruchung zerbrechen.

Der Gleitring muß eine besondere Form, wie bei einem keilförmigen radialen Dichtelement erhalten, damit eine Nachstellmöglichkeit der Dichtung gegeben ist.

Ein Dichtungselement nach Druckschrift FR-A 11 31 832 besitzt zwei angeschrägte Schultern, das axial durch Federkraft angepreßt wird, zwischen Mitnehmerhülse und Gleitring sitzt, und auf der Welle fest aufgeschoben ist. Zur Verminderung der Haftreibung ist im Bereich der Welle eine Ausnehmung vorgesehen, so daß eine verminderte Auflagefläche gebildet wird. Dieser Dichtring dichtet zur Welle hin radial und axial an der angeschrägten Fläche zum Gleitring hin ab. Zwischen Mitnehmerhülse und Gleitring bleibt ein Spalt. Es zeigt sich, daß im Einsatz der Gleitring axiale und radiale Bewegungen durchführt, die von der schrägen Dichtfläche des Gleitringes mit vollzogen werden, aber von der schrägen Dichtfläche des Dichtringes nicht mit ausgeführt werden können. Damit ist ein Spiel zwischen den Dichtflächen gegeben, das zur Undichtigkeit führt. Nachteilig ist weiterhin, daß ein Dichtring, z. B. aus PTFE-Material, sich verformen und in den Spalt zwischen Mitnehmerhülse und Gleitring hineindringen kann ; damit geht die Dichtwirkung durch Materialverlust verloren.

Nach der Druckschrift DE-A 17 75 727 wird eine selbst dichtende axiale Gleitringdichtung vorgeschlagen, die ein sekundäres Dichtelement vermeidet. Es wird ein federnder Ringkörper in V- oder U-Form vorgesehen, der jeweils an den beiden freien Rändern Gleitringe angesetzt hat, die axial zu einem Wellenabsatz und zum Gehäuse hin abdichten. Dieser federnde Ringkörper wird durch die sich drehende Welle auf Torsion zusätzlich beansprucht. Das bewirkt für den federnden Ringkörper eine ganz besondere Anfälligkeit für Spannungsrißkorrosion, z. B. dann, wenn austenitischer Stahl eingesetzt wird.

In den Druckschriften US-A 39 07 309 und DE-A 12 04 475 werden ebenfalls selbst dichtende axiale Gleitringdichtungen vorgeschlagen. Die Abdichtung wird jeweils durch einen axial wirkenden doppelten Gleitring gebildet, deren Gleitflächen federnd miteinander verbunden sind. Der Nachteil ist die besondere Anfälligkeit für Spannungsrißkorrosion, wie bei der Ausführung nach der Druckschrift DE-A 17 75 727. Weiterhin ist bei diesen Ausführungen ein Anpassen der Gleitflächen an die Schwingungen und Auslenkung der Welle insbesondere bei Pumpen zur Abdichtung von Flüssigkeiten und Gasen nicht gewährleistet. Diese Art der axialen Gleitflächendichtungen ohne sekundäres Dichtelement haben ihr Einsatzgebiet bei der Abweisung von Schmutzteilen für Gelenke und Lagerstellen, insbesondere bei Bodenfahrzeugen.

Bei O-Ringen als sekundäre Dichtelemente aus Perfluorelastomeren hat sich im praktischen Betrieb gezeigt, daß eine Temperatur des Fördermediums von 140 °C unter gleichzeitiger Beanspruchung durch Chemikalien zu bleibenden Verformungen führt und es dadurch zum vorzeitigen Ausfall der Gleitringdichtung kommen kann. Gelegentlich kommt es, bedingt durch die Materialstruktur, zur radialen Spaltung des Perfluorelastomerringes. Der hauptsächliche Nachteil des Werkstoffes ist sein teures Herstellungsverfahren. Die Herstellungskosten für radiale PTFE-Dichtelemente betragen nur 1/10 bis 1/20 der Dichtringe aus Perfluorelastomeren.

Bei dem Einsatz axialer Gleitringdichtungen hat es sich als nützlich erwiesen, im Bereich der Dichtflächen des sekundären Dichtringes auf der Maschinenwelle, die Welle selbst oder die Wellenschutzhülse mit einem verschleiß- und korrosionsfestem Material zu beschichten. Die korrosionsfeste Beschichtung ist erforderlich, weil Spalten bevorzugte Angriffsflächen für einen Korrosionsangriff darstellen. Es werden deshalb keramische oder andere metallische Oxide, z. B. Aluminiumoxid und Chromoxid aufgetragen. Diese oxidischen Werkstoffe besitzen aber eine schlechtere Wärmeleitfähigkeit als die Grundwerkstoffe der Wellen oder Wellenschutzhülsen. In diesen Fällen kommt es zum Wärmestau am sekundären Dichtelement.

Zur Überwindung des oben geschilderten Standes der Technik bestand die Aufgabe ein sekundäres Dichtelement für axiale Gleitringdichtungen bereitzustellen, das die geforderte Elastizität, chemische Beständigkeit, geringe Druck- und Schmutzempfindlichkeit aufweist und bei hohen Temperaturen eingesetzt werden kann.

Das sekundäre Dichtelement muß eine geringe axiale und radiale Beweglichkeit des Gleitringes ermöglichen, damit Schwingungen und Druck-stoßbeanspruchungen der Maschinenwelle ela-stisch aufgefangen werden. Diese Forderung wird durch leichtes Gleiten der radialen Dichtflächen auf den zylindrischen Begrenzungsflächen der Kammer und federndes Verhalten durch sich anpassende Durchmesseränderungen und die elastischen Mittel, die über Gleit- oder Stützring wirken, erfüllt.

Gegenstand der Erfindung ist demgemäß ein Dichtelement für axial wirkende Gleitringdichtungen welches aus einem gleitfähigen, nicht gummielastischem und nicht sprödem Werkstoff besteht, welches ferner in eine durch einen Gleitring, einen Stützring, sowie einen eine zylindrische Fläche aufweisenden Teil begrenzte Kammer einbaubar ist und welches zwei zu einer rotationsachse senkrecht stehende Ebene symmetrisch oder unsymmetrisch angeordnete Schenkel aufweist, welche über den Gleitring und den Stützring durch axial wirkende elastische Mittel gegen die genannte zylindrische Fläche mit einer dieser Flächen zugewandten Begrenzungsfläche preßbar sind, wobei durch die elastischen Mittel die volle Dichtwirkung infolge Durchmesserveränderung erreicht wird. Der Gegenstand der Erfindung ist dadurch gekennzeichnet, daß die Schenkel mit einem Ring verbunden sind, welcher die Begrenzungsfläche enthält und die Schenkel, die mit der zur Rotationsachse senkrecht stehende Ebene einen Winkel von 0,5 bis 89,5 bilden, daß der Ring und die Schenkel drei radiale Dichtflächen erzeugen, daß die Übergangsbereiche zwischen den Innenflächen der Schenkel und dem Ring derart abgerundet sind, daß ein Aufspalten infolge der Kerbwirkung vermieden wird und daß der Dichtungsring, der aus nicht gummielastischem und nicht sprödem Werkstoff besteht, eine wesentlich geringere Haftreibung als Gummi besitzt.

Besonders sinnvoll ist es, ein solches Material für das sekundäre Dichtelement einzusetzen, das eine höhere Wärmeleitfähigkeit als die bekannten gummielastischen Werkstoffe besitzt, damit die Temperaturbelastung des sekundären Dichtelementes durch größeren Wärmetransport zur Welle herabgesetzt wird, und die Welle oder Wellenschutzhülse im Bereich des Dichtelementes eine Beschichtung erhält, die mindestens die gleiche Wärmeleitfähigkeit besitzt wie der Grundwerkstoff.

Weiterhin ist es günstig, dem sekundären Dichtelement eine Form zu geben, die einen Raum zur Aufnahme von Fremdkörpern schafft.

Das erfindungsgemäße Dichtelement, das aus einem nur wenig elastischem Material hergestellt wird, kann wegen der durch die Formgebung erreichten elastischen Wirkung mit Übermaß des Innen- und Außendurchmessers in die Kammer, die durch Gleitring und Welle gebildet wird, eingebaut werden, ohne dieses Dichtelement dabei zu beschädigen.

Damit wird eine große Sicherheit bei der Montage erzielt, wie bei Gleitrichtdichtungen mit Elastomerdichtungen.

Ein mit beispielsweise Glasfaser gefülltes PTFE-Dichtelement führt bei Anfertigung mit Übermaß nicht zum Blockieren des Gleitringes, die geforderte axiale und radiale Beweglichkeit bleibt erhalten, die Gleitringdichtung öffnet nicht bei Schwingungs- oder Druckstoßbeanspruchung. Das Dichtelement verhält sich wie ein Elastomerring. Obwohl es aus steifem Material hergestellt ist, wird beim Aufschieben des Gleitringes über die Welle vom Dichtelement kein Material abgeschert, das Dichtelement gibt elastisch nach. Andererseits ist ein Dichtelement aus Glasfaser gefülltem PTFE in Keilform, zum Beispiel als Keil wie in FR-A 11 31 832 beschrieben, nur mit sehr genauen Fertigungstoleranzen herzustellen, damit die Abdichtung gewährleistet ist und die zusammengefügten Teile nicht zum Blockieren bringt, was bei PTFE besonders schwierig ist.

Die sphärische Form der Auflageflächen des Dichtelementes ergibt darüber hinaus ein Anpassen an die abzudichtenden Oberflächen der Maschinenwelle, des Maschinengehäuses und der Gleitringe. Das aus zwei Schenkeln, die an einem Ende miteinander verbunden sind, gebildete Dichtelement dichtet auf der Oberfläche der Maschinenwelle wie eine Dichtung mit doppeltem O-Ring ab. Damit ist eine besonders beanspruchte Dichtstelle doppelt abgesichert. Durch die beiden Schenkel wird zusätzlich ein freier Raum zur Aufnahme von Schmutz gebildet.

Dieses Dichtelement erhöht gleichzeitig durch die doppelte Auflagefläche auf der Welle gegenüber einem O-Ring den Wärmeabfluß. Die Wärmeableitung kann weiterhin durch geeignete Beschichtungen im Bereich der Dichtfläche vom Dichtelement zur Maschinenwelle oder deren Wellenschutzhülse gefördert werden. Die Beschichtung soll mit Materialien erfolgen, die eine mindestens gleich große Wärmeleitfähigkeit der aufgetragenen Schicht ergeben, wie sie der Grundwerkstoff selbst besitzt. Ein legierter Stahl mit 18 % Nickel und 10 % Chrom besitzt einen Wärmeleitwert von 46 W/mK. Aluminiumoxid (99 %ig) hat ein Wärmeleitvermögen von 21 W/mK, während Molybdän ein Wärmeleitvermögen von 123 W/mK besitzt. Durch die Aufbringung von Metalloxiden oder keramischen Materials wird die Wärmeleitfähigkeit der Berührungsflächen zwischen Dichtelement und Maschinenwelle herabgesetzt. Jedoch wird durch den Einsatz metallischer Werkstoffe zur Beschichtung der Welle oder der Wellenschutzhülse, mit zum Beispiel Molybdän oder Chrom-Nickel, eine verschleiß- und korrosionsfeste Schicht geschaffen, die im Bereich der Berührungsflächen des Dichtelementes und der Maschinenwelle einen Wärmestau vermindert. Sinnvoll ist es, die Beschichtungsbreite wenigstens auf das Zehnfache der Breite des Dichtelementes auszudehnen, damit eine gute Ableitung der Wärme an der Oberfläche erfolgt.

Gummielastische Werkstoffe besitzen zumeist ein schlechtes Gleitvermögen, sie rutschen schlecht auf der Welle. Im extremen Fall kommt es zum Verwickeln des Dichtringes. Die sphärische Auflagefläche des nur wenig elastischen Werkstoffes gleitet sehr gut auf der Welle, wenn zum Beispiel PTFE eingesetzt wird. Die geforderte axiale und radiale Beweglichkeit wird verbessert.

Das erfindungsgemäße Dichtelement wird in vorteilhafter Weise so angefertigt, daß die beiden Schenkel sich je an einem Ende aneinanderlegen und die Verbindungsstelle einen Ring bildet und im Bereich des Ansatzes zwischen den Schenkeln einen abgerundeten Übergang besitzt ; damit wird ein Aufspalten des Doppelschenkelringes durch Kerbwirkung vermieden.

Das vorgeschlagene sekundäre Dichtelement wird vorzugsweise so dimensioniert, daß ein Einsatz in Gleitringdichtungen mit vorgesehenem gummielastischen sekundären Dichtung (O-Ring) gegeben ist. Das Dichtelement wird in die dafür vorgesehene Kammer des Gleitringes eingesetzt und mit einem Stützring festgehalten. Damit entfällt die Anfertigung eines besonders geformten Gleitringes für das erfindungsgemäße Dichtelement. Gleitringdichtungen werden in großen Serien angefertigt. Die erzielte Vereinheitlichung ist daher von besonderer wirtschaftlicher Bedeutung. Neben der erzielten Einsparung bei der Fertigung senken sich die Aufwendungen für die Lagerung beim Hersteller und bei vielen Betreibern.

Als Werkstoff für dieses sekundäre Dichtelement eignet sich besonders Kunststoff, der der geforderten chemischen Beständigkeit bei Temperatur- und Druckbeanspruchung entspricht. Es wird vorzugsweise PTFE mit Glas- und Graphit-oder Kohlefüllung verwendet. Auch andere Stoffe, wie zum Beispiel keramische oder metallische Stoffe können beigemischt werden, wenn sie die geforderte chemische Beständigkeit aufweisen. Die Füllstoffe vermindern das Fließverhalten des reinen PTFE und können gleichzeitig, zum Beispiel bei Kohle oder Graphit, die Wärmeleitfähigkeit von PTFE um das 3-4 fache, auf ca. 0,7 W/mK, erhöhen. Auch gegenüber Gummi verbessert sich die Wärmeleitfähigkeit um das 4 fache.

Die chemische Beständigkeit gegenüber stark oxidierenden medien ist bei Kohle oder Graphit nicht gegeben. In diesen Fällen muß der Graphit- oder Kohlegehalt im PTFE herabgesetzt werden oder ganz entfallen. Dann wird das Dichtelement in reinem PTFE oder besser, wegen Herabsetzung des Fließverhaltens, mit Glasfüllung hergestellt. Es besteht auch die Möglichkeit, metallische Werkstoffe in Pulverform dem PTFE beizumischen, zum Beispiel Chrom-Nickel-Pulver. Damit wird eine bessere Wärmeleitfähigkeit wieder erreicht. In jedem Fall bleibt der wesentliche Vorteil des elastischen Verhaltens des Doppelschenkelringes erhalten.

Als vorteilhafte Mischungen haben sich PTFE mit 5-35 % Glasanteil, PTFE mit 15-30 % Graphitbzw. Kohlenstoffanteil oder eine Mischung mit 15-20 % Glasanteil und 5-10 % Graphit- oder Kohlenstoffanteil erwiesen. Außerdem ist eine Mischung, ausgehend von Graphit mit 5-30 % PTFE-Anteil geeignet. Es können auch andere beliebige Mischungsanteile hergestellt werden und darüber hinaus mit Metallpulver zu 0,5-50 % Anteil zum PTFE oder einer der vorgenannten Mischungen angereichert werden.

Die beiden Schenkel der erfindungsgemäßen Dichtelementes sind symmetrisch oder unsymmetrisch zur Mittellinie angeordnet. Der jeweilige Spreizwinkel der Schenkel kann von der Mittellinie aus gemessen 0,5 bis 89,5° betragen, es wird vorzugsweise die symmetrische Anordnung der Schenkel vorgesehen. Die Schenkel werden mit gleichbleibender Dicke ausgeführt. Die äußere und die innere Seite der Schenkel verlaufen dabei parallel.

Es ist weiterhin, wenn es durch die geringe Elastizität des Materials notwendig wird, möglich, die Schenkel im Bereich des Ansatzes am verbindenden Ring dünner auszuführen und die freien Schenkelenden zu verdicken. Damit entsteht ein weicheres Federverhalten des Doppelschenkelringes. Umgekehrt ist es möglich, die Schenkel vom Ansatz an dick zu lassen und nach den freien Schenkelenden dünner werden zu lassen. Dadurch wird ein träges Federverhalten des Doppelschenkelringes erreicht.

Das erfindungsgemäße Dichtelement kann auch als Dichtelement für eine Gleitringdichtung verwendet werdem, bei der der Gleitring auf einer Hohlwelle aufgeschoben ist oder als Dichtelement für den Gegenring verwendet wird. in beiden Fällen werden sinnvollerweise die beiden freien Schenkelenden nach außen gerichtet.

Die Herstellung des sekundären Dichtelementes, bestehend aus zwei Schenkeln, die je an einem Ende durch einen Ring verbunden sind, wird bei Verwendung von nichtmetallischem und nicht sprödem Material in vorteilhafter Weise in einem Stück aus einem hohlzylinderartigen Körper vorgenommen.

Der Doppelschenkelring kann aber auch ausschließlich aus metallischem Werkstoff hergestellt sein. Der Querschnitt kann dann die Form einer aufgespreizten Haarnadel annehmen, die an ihren Enden tropfenartige Verdickungen besitzt. Weiterhin ist es vorstellbar, daß die aus metallischem Werkstoff gefertigten Doppelschenkelringe gleiche Querschnittsprofile wie die vorwiegend aus PTFE oder der erwähnten Mischungen gefertigten Dichtelemente besitzen. Es ist hierbei günstig, dünne Blechstreifen zu verwenden, die entsprechend dem Querschnittsprofil vorgeformt und an den Enden zu einem Ring durch ein geeignetes Schweißverfahren zusammengefügt werden. Der Querschnitt des sekundären Dichtelementes ist hierbei hohlprofilartig.

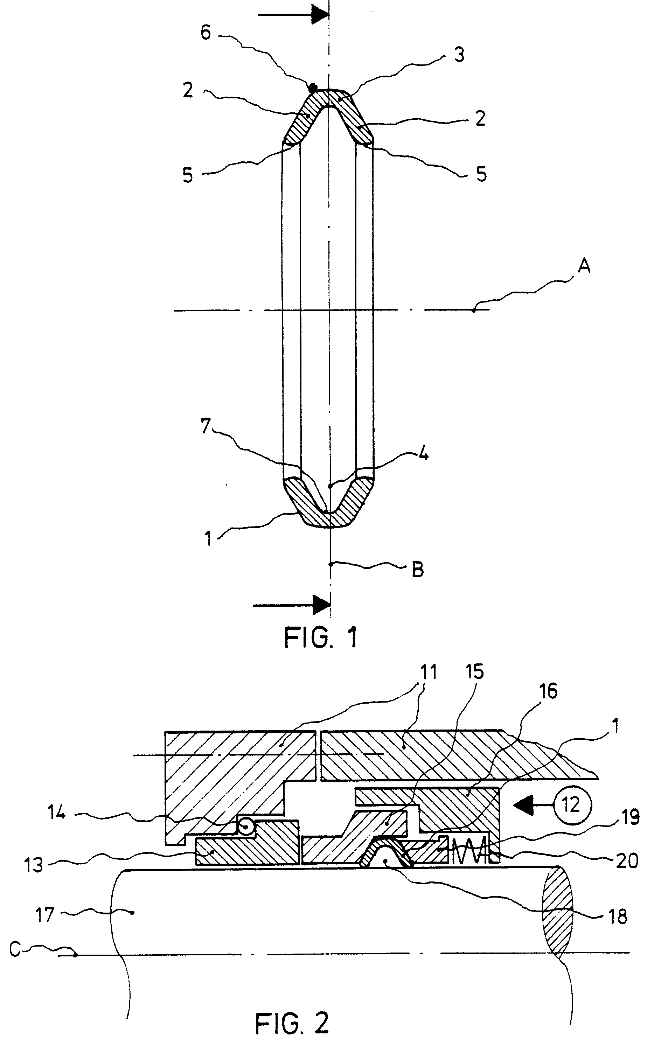

In Figur 1 ist ein erfindungsgemäßes sekundäres Dichtelement für axiale Gleitringdichtungen in der Ausführung in wenig elastischem, nichtmetallischem und nichtsprödem Material dargestellt. Das Dichtelement (1) ist rotationssymmetrisch zur Achse A und besitzt die Symmetrieebene B. Der Körper besteht aus zwei Schenkeln (2), die sich durch einen Ring (3) verbinden. Die beiden Schenkel schließen einen Freiraum (4) ein. Die Oberflächen der freien Schenkelenden (5) und die äußere Oberfläche (6) des Ringes (3) sind sphärisch ausgeführt.

In Figur 2 ist ein Dichtelement nach Figur 1 in einer axialen Gleitringdichtung eingebaut. (11) stellt das Maschinengehäuse zur Aufnahme der Gleitringdichtung dar. Die Beaufschlagung mit Produkt erfolgt aus Richtung (12). In das Maschinengehäuse ist ein feststehender Gegenring (13) mit Dichtelement (14) eingesetzt. Der Gleitring (15) wird von einem Gleitringgehäuse (16) geführt, das auf der Welle (17) mit Achse C fixiert ist. Im Gleitring (15) ist eine Kammer (18) ausgespart, die das erfindungsgemäße Dichtelement aufnehmen kann. Der Stützring (19) drückt über die Feder (20) gegen das Dichtelement (1).

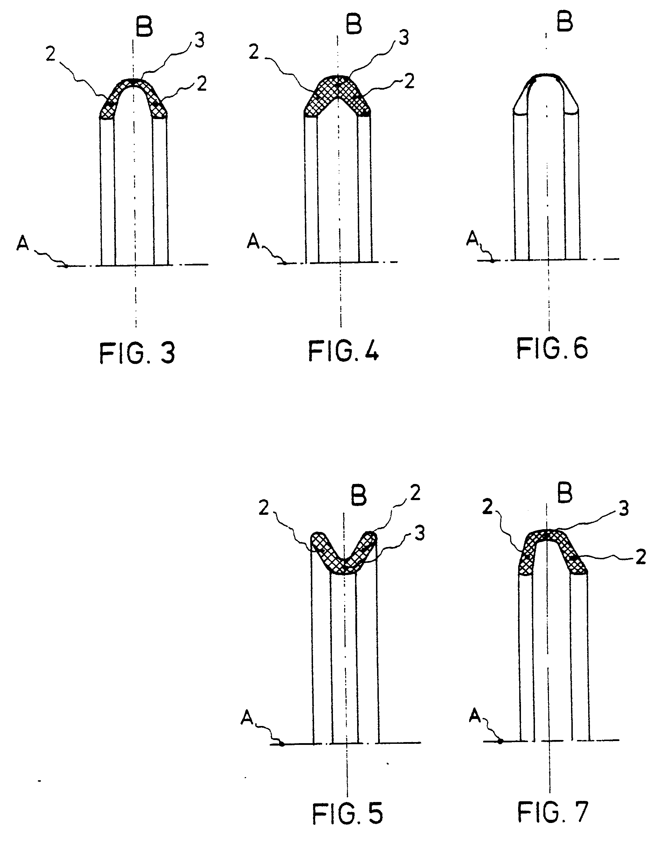

Das Schnittbild der Figur 3, zeigt eine Ausführungsform des Dichtelementes nach Figur 1 mit der Änderung, daß die beiden Schenkel (2) sich nach ihren freien Enden hin verdicken.

Das Schnittbild der Figur 4, zeigt eine Ausführungsform des Dichtelementes nach Figur 1 mit der Änderung, daß die beiden Schenkel (2) sich nach ihren freien Enden hin verjüngen.

Das Schnittbild der Figur 5, zeigt eine Ausführungsform des Dichtelementes nach Figur 1 mit der Änderung, daß die freien Schenkel (2) nach außen, von der Achse A weggerichtet sind.

Sinngemäß können die Ausführungsformen der Figuren 3, 4, 6 und 7 wie Figur 5 mit nach außen gerichteten freien Schenkeln (2) ausgeführt sein.

Das Schnittbild der Figur 6, zeigt eine Ausführungsform des Dichtelementes, wie sie bei Verwendung eines metallischen Werkstoffes angewandt werden kann.

Das Schnittbild der Figur 7, zeigt eine Ausführungsform des Dichtelementes, in dem die beiden Schenkel (2) ungleiche Winkel zur Ebene B bilden.

Beispiel

Ein sekundäres Dichtelement nach Figur 1 wird aus PTFE, das 25 % Graphit enthält, durch spanabhebende Bearbeitung aus einem zylindrischem Hohlkörper hergestellt. Durch die Graphitfüllung erhöht sich die Wärmeleitfähigkeit von 0,23 W/mK bei reinem PTFE auf 0,93 W/mK. Der Innendurchmesser wird mit 43 mm und der Außendurchmesser wird mit 49 mm ausgeführt. Der Innendurchmesser wird mit Minustoleranz und der Außendurchmesser wird mit Plustoleranz hergestellt. Die Schenkel (2) der Figur 1, bilden mit der Symmetrieebene B einen Winkel von 30°. Die Dicke der beiden Schenkel beträgt 1,7 mm. Beim Aufschieben des Ringes auf die Maschinenwelle werden die Schenkel gespreizt, der Innendurchmesser paßt sich dem Wellendurchmesser an. Der Außendurchmesser verkleinert sich, der Gleitring kann ohne Schwierigkeiten aufgeschoben werden. Erst durch Anpressen des Stützringes (19) der Figur 2, entfalten die äußeren und inneren Begrenzungsflächen des Doppelschenkelringes ihre volle Dichtwirkung.

Dieser Dichtring kann auch als Sekundärdichtung (14) zur Abdichtung des Gegenringes (13), nach Figur 2, eingesetzt werden ; es empfiehlt sich dabei, die Ausführungsform nach Figur 5 zu wählen. Die Anpressflächen des Gegenringes (13) und des Gehäuses (11), Figur 2, können dann den gleichen Winkel wie die Schenkel des Dichtelementes besitzen.

**Patentansprüche**

1. Sekundäres Dichtelement für axialwirkende Gleitringdichtungen, welches aus einem gleitfähigen, nicht gummielastischen und nicht sprödem Werkstoff besteht, welches ferner in eine durch einen Gleitring (15), einen Stützring (19), sowie einen eine zylindrische Fläche aufweisenden Teil begrenzte Kammer (18) einbaubar ist und welches zwei zu einer zur Rotationsachse (A) senkrecht stehende Ebene (B) symmetrisch oder unsymmetrisch angeordnete Schenkel (2) aufweist, welche über den Gleitring (15) und den Stützring (19) durch axial wirkende elastische Mittel (20) gegen die genannte zylindrische Fläche mit einer dieser Flächen zugewandten Begrenzungsfläche preßbar sind, wobei durch die elastischen Mittel (20) die volle Dichtwirkung infolge Durchmesserveränderung erreicht wird, dadurch gekennzeichnet, daß die Schenkel (2) mit einem Ring (3) verbunden sind, welcher die Begrenzungsfläche (6) enthält und die Schenkel (2), die mit der zur Rotationsachse (A) senkrecht stehenden Ebene (B) einen Winkel von 0,5° bis 89,5° bilden, daß der Ring (3) und die Schenkel (2) drei radiale Dichtflächen erzeugen, daß die Übergangsbereiche zwischen den Innenflächen der Schenkel (2) und dem Ring (3) derart abgerundet sind, daß ein Aufspalten infolge der Kerbwirkung vermieden wird und daß der Dichtungsring (3), der aus nicht gummielastischem und nicht sprödem Werkstoff besteht, eine wesentlich geringere Haftreibung als Gummi besitzt.

2. Dichtelement nach Anspruch 1, dadurch gekennzeichnet, daß die Oberflächen der freien Schenkelenden (5) und die Begrenzungsfläche (6) in an sich bekannter Weise sphärisch ausgebildet sind.

3. Dichtelement nach einem der Ansprüche 1 bis 2, dadurch gekennzeichnet, daß die Schenkel (2) mit der zur Rotationsachse (A) senkrecht stehenden Ebene (B) in an sich bekannter Weise symmetrisch angeordnet sind.

4. Dichtelement nach einem der Ansprüche 1 bis 3, dadurch gekennzeichnet, daß die beiden Schenkel (2) in an sich bekannter Weise mit gleichbleibender Dicke ausgeführt sind.

5. Dichtelement nach einem der Ansprüche 1 bis 4, dadurch gekennzeichnet, daß sich die beiden Schenkel (2) in an sich bekannter Weise vom Ring (3) bis zu den Schenkelenden verdicken.

6. Dichtelement nach einem der Ansprüche 1 bis 5, dadurch gekennzeichnet, daß sich die beiden Schenkel (2) vom Ring (3) bis zu den Schenkelenden verjüngen.

7. Dichtelement nach einem der Ansprüche 1 bis 6, dadurch gekennzeichnet, daß die freien Enden der Schenkel (2) radial nach außen gerichtet sind.

8. Dichtelement nach einem der Ansprüche 1 bis 7, dadurch gekennzeichnet, daß der Innendurchmesser mit Minustoleranz und der Außendurchmesser mit Plustoleranz hergestellt ist.

9. Dichtelement nach einem der Ansprüche 1 bis 8, dadurch gekennzeichnet, daß es aus Polytetrafluorethylen, aus Graphit, aus Kohle oder aus einer beliebigen Mischung der genannten Stoffe mit Polytetrafluorethylen besteht.

10. Dichtelement nach Anspruch 9, dadurch gekennzeichnet, daß es aus einer Mischung mit zusätzlich 0,5 bis 50 Gew.% Glas hergestellt ist.

11. Dichtelement nach Anspruch 9, dadurch gekennzeichnet, daß es aus Polytetrafluorethylen gemischt mit Glas und Graphit, vorzugsweise 20 Gew.% Glas und 5 Gew.% Graphit hergestellt ist.

12. Dichtelement nach Anspruch 9, dadurch gekennzeichnet, daß es aus Polytetrafluorethylen besteht, das mit Metallpulver gemischt ist.

13. Dichtelement nach einem der Ansprüche 1 bis 8, dadurch gekennzeichnet, daß es aus einem metallischen Werkstoff in dünnem Blech hohlprofilartig geformt ist.

14. Dichtelement nach einem der Ansprüche 1 bis 8, dadurch gekennzeichnet, daß es aus metallischem Werkstoff in dünnem Blech haarnadelartig mit tropfenartigen Verdickungen an den Schenkelenden geformt ist.

15. Dichtelement nach einem der Ansprüche 1 bis 14, dadurch gekennzeichnet, daß es in seiner äußeren Form einer O-Ringkammer angepaßt ist, die mit dem Stützring (19) abgeschlossen ist.

16. Dichtelement nach einem der Ansprüche 1 bis 15, dadurch gekennzeichnet, daß die Schenkelenden (5) gegen eine Maschinenwelle preßbar sind, die im Bereich der Berührungsfläche in an sich bekannter Weise eine verschleiß- und korrosionsfeste Schicht aufweist.

**Claims**

1. A secondary sealing element device for an axial seal ring, which formed of material with good sliding, non-rubber-elastic and non-brittle characteristics, which is positioned in a chamber area surrounded by a sliding ring (15), adjustment ring (19) and by a cylindrical surface wall of the sealing device, and furthermore has two arms arranged symmetrical or unsymmetrical to a plane (B) perpendicular to the axis of rotation (A) of the shaft, which are compressible via the sliding ring (15) and adjustment ring (19) by axially effective elastic means against (20) the above-mentioned cylindrical surface with a limiting surface facing one of these surfaces, whereby the full sealing effect is achieved by the elastic means (20) due to changes in the diametric dimensions, as characterized by the fact that, the arms (2) are connected with a ring (3) which contains the limiting surface (6) and the arms (2), which form an angle 0.5° to 89.5° with the perpendicular plane (B) to the rotation axis (A), so that the ring (3) and the arms (2) create three radial sealing surfaces, so that the transition areas between the inner surfaces of the arms (2) and the ring (3) are rounded off in such a way that a splitting open is avoided due to a notch effect and the sealing ring (3) which is made of non-rubber and non-brittle material, has significantly lower friction than rubber.

2. A sealing device according to claim 1, wherein the surfaces of the free arm-ends and limiting surface (6) are formed spherically as known.

3. A sealing device according to claims 1 or 2, wherein the arms (2) are positioned as known symmetrically to the perpendicular plane (B) to rotation axis (A).

4. A sealing device according to claims 1 to 3, wherein both arms (2) have a constant thickness as known.

5. A sealing device according to claims 1 to 4, wherein both arms (2) have a thickness increasing from the ring (3) to the ends of the arms as known.

6. A sealing device according to claims 1 to 5, wherein both arms (2) have a thickness decreasing from the ring (3) to the ends of the arms as known.

7. A sealing device according to claims 1 to 6, wherein the free ends of the arms (2) are directed radially outwardly from the ring (3).

8. A sealing device according to claims 1 to 7, wherein the sealing ring has an interior diameter manufactured with minus-tolerance and an outer diameter with plus-tolerance.

9. A sealing device according to claims 1 to 8, wherein the sealing element consists from the group of Polytetrafluorethylen, graphit carbon or a mixture of the above-mentioned materials with Polytetrafluorethylen.

10. A sealing device according to claim 9, wherein the sealing element is manufactured an additional 0.5 to 50 wt.% glass.

11. A sealing device according to claim 9, wherein the sealing element is made out of Polytetrafluorethylen mixed with glass and graphite, preferably 20 wt.% glass and 5 wt.% graphite.

12. A sealing device according to claim 9, wherein the sealing element is made out of Polytetrafluorethylen which is mixed with metallic powder.

13. A sealing device according to claims 1 to 8, wherein the sealing element is made out of metallic sheet in form of a hollow profile.

14. A sealing device according to claims 1 to 8, wherein the sealing element is made out of metallic sheet in form of a hairpin with drop-like thickenings at the arm ends.

15. A sealing device according to claims 1 to 14, wherein the sealing element has an outer shape congruent to an O-ring chamber, which is closed off by the adjustment ring.

16. A sealing device according to claims 1 to 15, wherein the arm ends of the sealing element press against a shaft having a wear and corrosion resistant layer in the surface area of contact as known.  •

**Revendications**

1. Elément d'étanchéité secondaire pour garnitures mécaniques d'étanchéité axiales, d'un matériau propre au glissement, ne possédant pas l'élasticité du caoutchouc et n'étant pas fragile, qui peut aussi être incorporé dans une chambre (18) délimitée par un anneau de glissement (15), un anneau de pression (19) et une partie comportant une surface cylindrique, munie de deux ailes (2), de disposition symétrique o asymétrique par rapport à un plan (B) vertical à un axe de rotation (A), ces deux ailes pouvant être pressées à l'aide de l'anneau de glissement (15) et de l'anneau de pression (19) contre la surface cylindrique susmentionnée par des moyens élastiques à effet axial par une surface limite tournée vers une de ces surfaces, les moyens élastiques (20) permettant l'obtention du plein effet d'étanchéité, obtenue par la modification du diamètre, caractérisé par le fait que les ailes (2) sont reliées avec un anneau (3) où se trouve la surface limite (6), et que les ailes (2) forment avec le plan vertical (B) un angle entre 0,5° et 89,5°, que l'anneau (3) et les ailes (2) constituent trois surfaces d'étanchéité radiales, que les zones de transition entre les surfaces intérieures des ailes (2) et l'anneau (3) sont arrondies de façon que tout clivage par effet d'entaille est exclu, et que le frottement par adhérence de l'anneau d'étanchéité (3), d'un matériau n'ayant pas l'élasticité du caoutchouc et n'étant pas fragile, est de loin inférieur à celui du caoutchouc.

2. Elément d'étanchéité d'après la revendication 1 caractérisé par le fait que les extrémités libres (5) des ailes et la surface limite (6) sont développées en forme sphérique selon un système en principe connu.

3. Elément d'étanchéité d'après la revendication 1 à 2 caractérisé par le fait que les ailes (2) avec le plan vertical (B) par rapport à l'axe de rotation (A) ont une disposition symétrique selon un système en principe déjà connu.

4. Elément d'étanchéité d'après la revendication 1 à 3 caractérisé par le fait que les deux ailes (2) sont développées en épaisseur uniforme selon un système en principe déjà connu.

5. Elément d'étanchéité d'après la revendication 1 à 4 caractérisé par le fait que selon un système en principe déjà connu les deux ailes s'épaississent à partir de l'anneau (3) jusqu'aux extrémités des ailes.

6. Elément d'étanchéité d'après la revendication 1 à 5 caractérisé par le fait que les deux ailes (2) s'effilent à partir de l'anneau (3) jusqu'aux extrémités des ailes.

7. Elément d'étanchéité d'après la revendication 1 à 6 caractérisé par le fait que les extrémités libres des ailes (2) sont dirigées vers l'extérieur en sens radial.

8. Elément d'étanchéité d'après la revendication 1 à 7 caractérisé par le fait que le diamètre intérieur est conçu avec un écart inférieur et le diamètre extérieur avec un écart supérieur.

9. Elément d'étanchéité d'après la revendication 1 à 8 caractérisé par le fait qu'il est constitué de polytétrafluoréthylène, de graphite, de charbon ou d'un mélange quelconque des matières mentionnées avec du polytétrafluoréthylène.

10. Elément d'étanchéité d'après la revendication 9 caractérisé par le fait qu'au mélange dont il est constitué est ajouté en plus du verre de 0,5 à 50 % en poids.

11. Elément d'étanchéité d'après la revendication 9 caractérisé par le fait qu'il est constitué de polytétrafluoréthylène mélangé avec du verre et du graphite, de préférence avec 20 % en poids de verre et 5 % en poids de graphite.

12. Elément d'étanchéité d'après la revendication 9 caractérisé par le fait qu'il est constitué de polytétrafluoréthylène mélangé avec une poudre de métal.

13. Elément d'étanchéité d'après la revendication 1 à 8 caractérisé par le fait que le matériau métallique dont il est constitué est moulé dans une tôle de faible épaisseur similaire à un profilé creux.

14. Elément d'étanchéité d'après la revendication 1 à 8 caractérisé par le fait que le matériau métallique dont il est constitué est moulé dans une tôle de faible épaisseur recevant une forme ressemblant à une épingle à cheveux et comportant des épaississements comme de gouttes sur les extrémités des ailes.

15. Elément d'étanchéité d'après la revendication 1 à 8 caractérisé par le fait que sa forme extérieure s'adapte à une chambre à anneau torique fermée par l'anneau de pression (19).

16. Elément d'étanchéité d'après la revendication 1 à 8 caractérisé par le fait que les extrémités des ailes (5) peuvent être pressées contre un arbre de machine, selon un système en principe déjà connu, pourvu dans la zone de la surface de contact d'une couche résistant à l'usure et à la corrosion.

FIG. 1

FIG. 2

1

FIG. 3

FIG. 4

FIG. 6

FIG. 5

FIG. 7